Europäisches Patentamt

European Patent Office

Office européen des brevets

(19)

(11) Publication number: **0 152 219**
**B1**

(12)

## EUROPEAN PATENT SPECIFICATION

(45) Date of publication of patent specification: 21.09.88

(51) Int. Cl.⁴: **B 60 R 1/06**, F 15 B 7/00

(21) Application number: 85300560.1

(22) Date of filing: 28.01.85

(54) Hydraulic remote control system.

(30) Priority: 03.02.84 FR 8401722
31.05.84 GB 8413945

(43) Date of publication of application:
21.08.85 Bulletin 85/34

(45) Publication of the grant of the patent:
21.09.88 Bulletin 88/38

(84) Designated Contracting States:
DE FR GB

(56) References cited:
CH-A-314 037
DE-U-7 110 524
FR-A-2 363 017
FR-A-2 424 834
GB-A-1 268 313
US-A-3 873 190

(73) Proprietor: B.S.G. Overseas Limited
Burgess House 1270 Coventry Road
Birmingham B25 8BB (GB)

(72) Inventor: Desforges, Patrick Jean James
65 rue du Docteur Siffre
F-77930 Perthes-en-Gatenais (FR)
Inventor: Harry, Jean-Michel
68 avenue de la Foset
F-77210 Avon (FR)
Inventor: Cluet, Yves
46 rue de la République
F-77210 Avon (FR)

(74) Representative: Hollinghurst, Antony
Britax Limited Patent Department
Chichester West Sussex PO19 2AQ (GB)

Description

This invention relates to a hydraulic remote control system for adjusting the orientation of a controlled member and has particular application to the adjustment of the orientation of a rearview mirror for a vehicle.

Patent Specification FR-A-2424834 according to the preamble of claim 1 discloses an adjustable mounting assembly, particularly for a rearview mirror, which comprises a base member, a pivot bearing mounted on the base member, a controlled member mounted on the pivot bearing, a manually operable control device, and three hydraulic circuits each having a fluid pressure transmitter comprising a chamber having a flexible wall, and a fluid pressure receiver, the fluid pressure transmitters being mechanically connected to the manually operable control device and the fluid pressure receivers mechanically connecting the controlled member to the base member at respective locations which are spaced from each other and from the pivot bearing.

According to the invention in one aspect, in an adjustable mounting assembly of the foregoing type, the control device comprises a housing having a single cylindrical recess containing the flexible-walled chambers of the fluid pressure transmitters, a manually operable control member, and thrust transmitting means located in the housing and coupled to the manually operable control member so that displacement of the latter causes the thrust transmitting means to compress one or two of the three chambers against the cylindrical walls of the recess depending on the direction of displacement.

Embodiments of the invention will now be described, by way of example, with reference to the accompanying drawings, in which:

Figure 1 is a schematic perspective diagram of a control system for a rearview mirror in accordance with the prior art;

Figure 2 is a schematic cross-sectional view showing both the master and slave units of a remote control rearview mirror in accordance with one embodiment of the invention;

Figure 3 is a schematic diagram illustrating a modification of part of the embodiment shown in Figure 2;

Figure 4 is a cross-sectional view of master control unit;

Figure 5 is a cross-sectional view taken on the line 5-5 in Figure 4;

Figure 6 is a cross-sectional view of a further master control unit for use in the embodiment shown in Figure 2; and

Figure 7 is a cross-sectional view taken on the line 7-7 in Figure 6.

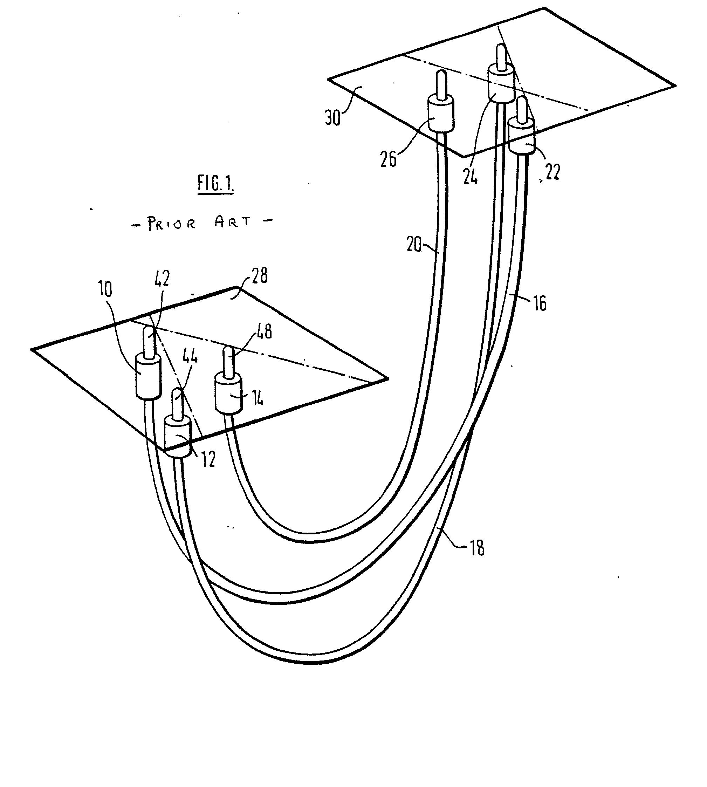

Referring now to Figure 1, the control system for a vehicle rearview mirror assembly comprises three piston-and-cylinder assemblies 10, 12 and 14 which are located in a master control unit to be described in more detail hereinafter. Each of these pistons 10, 12 and 14 is connected by a respective tube 16, 18 and 20 to a respective slave piston-and-cylinder unit 22, 24 and 26 located in a mirror housing, as will be described in more detail hereinafter. The tubes 16, 18 and 20 are formed of a flexible plastic material. The pistons of the units 10, 12 and 14 define a plane 28 while the pistons of the slave units 22, 24 and 26 define a plane 30. It will be realised that any displacement of the plane 28, for example in response to movement of a control lever normal to such plane, will cause a complementary movement of the plane 30 which represents a mirror carrier.

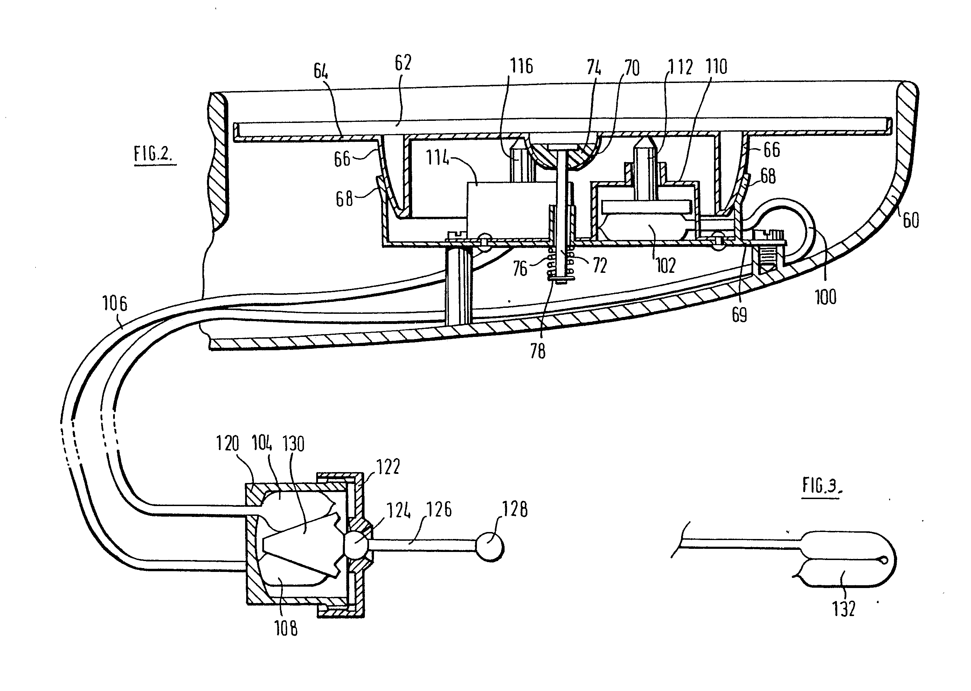

Turning now to Figure 2, a rearview mirror unit comprises a housing 60 containing a mirror 62 mounted on a mirror carrier 64. The mirror carrier 64 has a part-spherical flange 66 extending away from the mirror 62 and engaging in a correspondingly shaped flange 68 on a-base member 69 which is secured to the back of the inside of the mirror case 60. Concentric with the part-spherical flange 66 is a hemispherical socket 70 having a central hole through which projects a rod 72 having a hemispherical head 74 which engages in the socket 70. The other end of the rod 72 projects through a hole in the centre of the member 69 and carries a compression spring 76 which engages between a washer 78 and the back of the member 69 so as to draw the hemispherical flange 66 into engagement with the hemispherical surface of the flange 68. Thus the mirror 62 is pivotable about the centre of curvature of the hemispherical flange 66.

Each hydraulic circuit consists of a flexible plastics tube, such as the tube 100 having a sealed bulb 102 on one end and a similar sealed bulb 104 on the other. Each tube is filled with hydraulic liquid and sealed before assembly with the mirror head and the master control unit. The thickness of the walls of the bulbs 102 and 104 is much less than the thickness of the wall of the tube 100 so that, if one of the bulbs 102, 104 is flattened by application of external pressure, the liquid displaced therefrom travels along the tube 100 and distends the other bulb without significantly increasing the volume of the tube 100 itself. The second hydraulic unit comprises a tube l06 having a bulb l08 at one end while the other bulb is not visible in Figure 2. No part of the third hydraulic cylinder is visible in Figure 2. However, all three such units are identical with each other.

The bulb 102 is accommodated in a housing 110 mounted on the support member 69 in the mirror case 60. The housing 110 also accommodates a piston 112 having its crown in engagement with the bulb 102 and its other end abutting against the back of the mirror carrier 64. The bulb (not shown) attached to the end of the tube 106 is accommodated in a similar housing 114 having a piston 116 while the corresponding bulb of the third hydraulic circuit is provided with a similar housing and piston (not shown). The three housings are located so that their pistons engage with the back of the mirror carrier 64 at locations which are symmetrically disposed round the rod 72.

The master control unit comprises a cylindrical housing 120 closed at one end by a cap 122 having a part-spherical socket which accommodates a ball 124 formed at an intermediate point along the length of an operating lever 126. One end of the lever 126 projects outwardly from the housing 120 and has a knob 128 on its end for manual actuation. The other end of the lever 126, within the housing 120 carries a conical thrust member 130. The two bulbs 104 and 108 connecting to the tubes 100 and 106, together with the corresponding bulb of the third hydraulic circuit are accommodated in the housing 120 and uniformly spaced round the thrust member 130. Thus, if the lever 126 is displaced from its central position, at least one of the bulbs accommodated in the housing 120 will be compressed so that its volume is reduced and at least one of the other bulbs will be allowed to expand. The resulting displacement of liquid along the tubes of the three hydraulic circuits has the consequence that each movement of the lever 126 causes a corresponding movement of the mirror carrier 64. In the event of leakage of hydraulic fluid from any of the hydraulic circuits, the relevant circuit can readily be replaced.

Figure 3 illustrates a bulb 132 which can be used in place of the bulbs such as the bulb 102 in the mirror housing 60. The bulb 132 is initially constructed to have twice the length as the bulb 102 and is then folded back on itself as illustrated so as to provide a bulb of approximately the same length but twice the volume as the bulb 102. Similar bulbs are then provided for the other two hydraulic circuits. The effect of this is that twice the volume of liquid has to be displaced to cause the same movement of the mirror carrier 64 and consequently the displacement thereof resulting from any particular displacement of the lever 126 is halved.

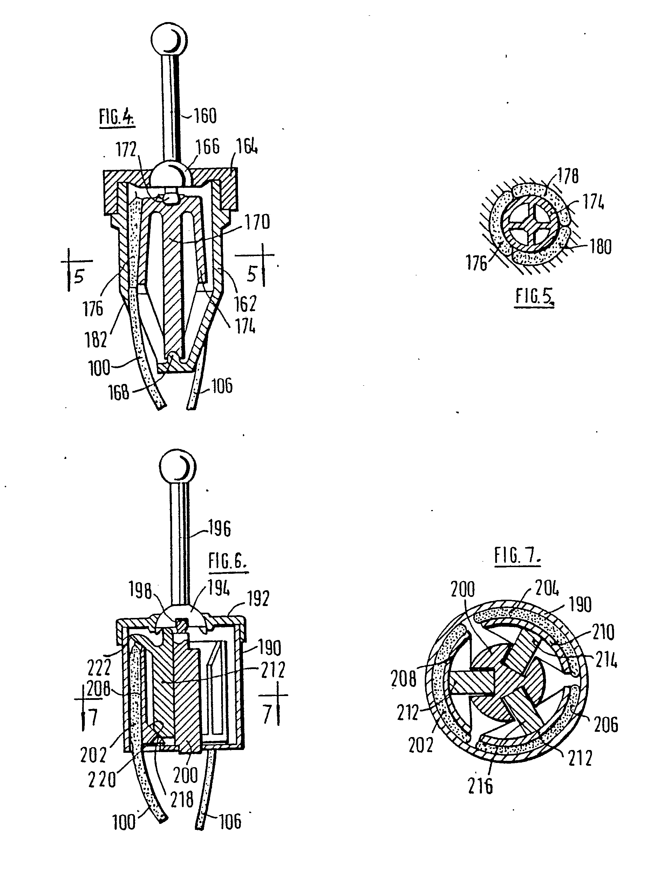

Figures 4 and 5 illustrate a modification of the master control unit for use where it is desired to make the diameter of the unit, relative to the axis of the control rod 160 in its central position, as small as possible. The main body 162 of the housing is generally cylindrical and has a cap 164 with a part-spherical socket for a spherical formation 166 on the lever 160, similar to that previously described. At its other end, the main body of the housing has a central part-spherical stud 168 which engages in a socket in a thrust member 170. At its other end, the thrust member 170 has a part-spherical socket for receiving a part-spherical stud 172 on the inner end of the lever 160. Thus displacement of the lever 160 causes a complementary angular movement of the thrust member 170 about the stud 168. The thrust member 170 has a frustoconical flange 174, the cone angle of which is such that, when the lever 160 is displaced to its maximum extent, the outer surface of the flange 170 is parallel to, and in close proximity to the inner wall of the main body 162 of the housings. Bulbs 176, 178 and 180, each formed on the end of the tube of a respective hydraulic circuit, are received in the annular space between the inner wall of the housing 162 and the thrust member 176. The tubes, such as the tubes 100 and 106 of the hydraulic circuits, project through respective slots, such as the slot 182 in the base portion 162 and the bulbs 176, 178 and 180 can be withdrawn through these slots if replacement is necessary.

Figures 6 and 7 illustrate yet another form of master control unit for use when it is desired to be able to substantially completely flatten the bulbs of the hydraulic circuits so as to expel the maximum amount of liquid therefrom. The control unit illustrated in Figure 6 has a cylindrical body 190 with a cap 192 having a spherical socket for a hemispherical formation 194 on a control lever 196. In the middle of its flat face, the hemispherical formation 194 has a socket for receiving a part-spherical stud 198 carried on a static stem 200 which is mounted on the other end face of the housing 190. Three bulbs 202, 204 and 206, one for each of the hydraulic circuits, are spaced around the interior walls of the housing 190 and are engaged by respective arcuate thrust members 208, 210 and 211, the outer surfaces of which preferably have the same radius as the inner wall of the housing so as to enable the bulbs to be substantially completely flattened therebetween. A respective cam slider 212, 214, 216 for each thrust member is received in a corresponding slot in the central stem 200. As can best be seen from Figure 6, each cam slider engages with the flat surface of the hemispherical formation 194 on the lever 196 and has a first cam surface 218 engaging with a complementary surface 220 on the corresponding thrust member, and a second cam surface 222 engaging with the edge of the other end of such thrust member. Consequently, if a cam slider such as the slider 212 is pressed inwardly by displacement of the lever 196 from its central position, the corresponding thrust member is moved radially outwardly, compressing the corresponding bulb.

In any of the embodiments of the invention, the three tubes of the hydraulic circuits, together with their bulbs or bellows, may all be moulded as a single unit. Since the entire hydraulic circuits can be made of plastics material, the choice of hydraulic liquid is not limited by problems of corrosion.

**Claims**

1. An adjustable mounting assembly comprising a base member (69), a pivot bearing (74) mounted on the base member (69), a controlled member (30, 62) mounted on the pivot bearing (74), a manually operable control device (32, 120, 146, 162, 190), and three hydraulic circuits (16, 18, 20, 100, 106) each having a fluid pressure transmitter (10, 12, 14, 104, 108, 142, 144, 176, 178, 180, 202, 204, 206) comprising a chamber having a flexible wall, and a fluid pressure receiver (22, 24, 26, 102), the fluid pressure transmitters (10, 12, 104, 142, 176, 178, 202, 204) being mechanically connected to the manually operable control device (32, 120, 146, 162, 190) and the fluid pressure receivers (22, 24, 26, l02) mechanically connecting the controlled member (30, 62) to the base member (69) at respective locations which are spaced from each other and from the pivot bearing (74), characterised in that the control device comprises a housing (120, 162, 190) having a single cylindrical recess containing the flexible-walled chambers of the fluid pressure transmitters (104, l08, 176, 178, 180, 202, 204, 206), a manually operable control member (126, 160, 196), and thrust transmitting means (130, 174, 212, 214, 216) located in said recess and coupled to the manually operable control member (126, 160) so that displacement of the latter causes the thrust transmitting means (130, 174) to compress one or two of the three chambers against the cylindrical walls of the recess depending on the direction of displacement.

2. A mounting assembly according to claim 1, wherein the thrust transmitting means comprises a central conical member (130, 174) which is in direct engagement with the flexible-walled chambers of the fluid pressure transmitters (104, 108, 176, 178, 180).

3. A mounting assembly according to claim 2, wherein the conical member (130) is integral with the manually operable control member (126).

4. A mounting assembly according to claim 2, wherein the manually operable control member (160) is pivotally mounted on the housing (162) and is connected to the conical member (174) by a pivotal link (172) so that a relatively large movement of the control member (160) causes a smaller movement of the conical member (174).

5. A mounting assembly according to claim 1, wherein the thrust transmitting means comprises a respective sliding wedge (212, 214, 216) for each fluid pressure transmitter (202, 204, 206), and means responsive to the manually operable control member (196) for moving each wedge (212, 214, 216) axially relative to the cylindrical housing (190) so as to cause radial movement of a respective follower member (208, 210, 211) for each hydraulic circuit (16, 18, 20, 100, l06).

6. A mounting assembly according to any preceding claim, wherein the controlled member (30, 62) is a mirror of a vehicle rearview mirror assembly.

**Patentanspruche**

1. Einstellbare Halterungsanordnung, umfassend ein Basisteil (69), ein an dem Basisteil (69) montiertes Drehlager (74), ein an dem Drehlager (74) montiertes gesteuertes Element (30, 62), ein von Hand betatigbares Steuergerät (32, 120, 146, 162, 190), und drei Hydraulikkreise (16, 18, 20, 100, 106) mit jeweils einem Fluiddrucksender (10, 12, 14, 104, 108, 142, 144, 176, 178, 180, 202, 204, 206) mit einer eine flexible Wand aufweisenden Kammer, und einem Fluiddruckempfänger (22, 24, 26, l02), wobei die Fluiddrucksender (10, 12, 104, 142, 176, 178, 202, 204) mechanisch mit dem von und betätigbaren Steuergerät (32, 120, 146, 162, 190) verbunden sind und die Fluiddruckempfänger (22, 24, 26, 102) das gesteuerte Element (30, 62) an jeweiligen Stellen mit dem Basisteil (69) mechanisch verbinden, welche voneinander und von dem Drehlager (74) beabstandet sind, dadurch gekennzeichnet, daß das Steuergerät ein Gehäuse (120, 162, 190) mit einer einzelnen zylindrischen Ausnehmung, die die flexible Wandungen aufweisenden Kammern der Fluiddruckempfänger (104, 108, 176, 178, 180, 202, 204, 206) enthalten, ein von Hand betätigbares Steuerglied (126, 160, 176) und Schubübertragungsmittel (130, 174, 212, 214, 216) enthält, die in der Ausnehmung angeordnet und mit dem von Hand betätigbarem Steuerglied (126, 160) gekoppelt sind, so daß dessen Versetzung die Schubübertragungsmittel (130; 174) veranlaßt, abhängig von der Richtung der Versetzung eine oder zwei der drei Kammern gegen die zylindrischen Wände der Ausnehmung zusammenzudrücken.

2. Halterungsanordnung nach Anspruch 1, bei der die Schubübertragungsmittel ein mittleres konisches Element (130, 174) aufweisen, welches sich in direktem Eingriff mit den eine flexible Wand aufweisenden Kammern der Fluiddrucksender (104, 108, 176, 178, 180) befindet.

3. Halterungsanordnung nach Anspruch 2, bei der das konische Element (130) einstückig mit dem von Hand betätigbaren Steuerglied (126) ist.

4. Halterungsanordnung nach Anspruch 2, bei der das von Hand betätigbare Steuerglied (160) schwenkbar an dem Gehäuse (172) montiert und durch ein Schwenkverbindungsglied (172) mit dem konischen Element (174) derart verbunden ist, daß ein relativ großer Bewegungshub des Steuerglieds (160) einen kleineren Bewegungshub des konischen Elements (174) veranlaßt.

5. Halterungsanordnung nach Anspruch 1, bei der die Schubübertragungsmittel einen für jeweils einen Fluiddrucksender (202, 204, 206) vorgesehehen Gleitkeil (212, 214, 216) sowie Mittel aufweisen, die auf das von und betätigbare Steuerglied (176) ansprechen, um jeden Keil (212, 214, 216) axial bezüglich des zylindrischen Gehäuses (190) zu bewegen, um eine Radialbewegung eines zugehörigen Folgeglieds (208, 201, 211) für jeden Hydraulikkreis (16, 18, 20, 100, l06) zu veranlassen.

6. Halterungsanordnung nach jede vorausgehenden Anspruch, bei der das gesteuerte Teil (30, 62) ein Spiegel einer Fahrzeug-Rückspiegelanordnung ist.

**Revendications**

1. Ensemble de fixation réglable comprenant une embase (69), un palier de pivotement (74) monté sur l'embase (69), un élément commandé (30, 62) monté sur le palier de pivotement (74), un dispositif de commande manuelle (32, 120, 146, 162, 190) et trois circuits hydrauliques (16, 18, 20, 100, 106) ayant chacun un émetteur de fluide sous pression (10, 12, 14, 104, l08, 142, 144, 176, 178, 180, 202, 204, 206) comprenant une chambre ayant une paroi souple et un récepteur de fluide sous pression (22, 24, 26, l02), les émetteurs de

fluide sous pression (10, 12, l04, 142, 176, 178, 202, 204) étant reliés mécaniquement au dispositif de commande manuelle (32, 120, 146, 162, 190) et les récepteurs de fluide sous pression (22, 24, 26, 102) reliant mécaniquement l'élément commande (30, 62) à l'embase (69) en des endroits respectifs qui sont espacés les uns des autres et du palier de pivotement (74), caractérisé en ce que le dispositif de commande comporte un boîtier (120, 162, 190) ayant un logement cylindrique unique contenant les chambres à parois souples des méetteurs de fluide sous pression (104, 108, 176, 178, 180, 202, 204, 206), un élément de commande manuelle (126, 160, 196) et un moyen de transmission de poussée (130, 174, 212, 214, 216) logé dans lequel logement et accouplé à l'élément de commande manuelle (126, 160) de telle sorte que le déplacement de ce dernier amène le moyen de transmission de poussée (130, 174) à comprimer une ou deux des trois chambres contre les parois cylindriques du logement suivant la direction du déplacement.

2. Un ensemble de fixation selon la revendication 1, dans lequel le moyen de transmission de poussée comprend un élément conique centrale (130, 174) qui est en prise directe avec les chambres à parois souples des émetteurs de fluide sous pression (104, 108, 176, 178, 180).

3. Un ensemble de fixation selon la revendication 2, dans lequel l'élément conique (130) est d'un seul tenant avec l'élément de commande manuelle (126).

4. Un ensemble de fixation selon la revendication 2, dans lequell'élément de commande manuelle (160) est monté pivotant sur le boîtier (162) et est relié à l'élément conique (174) par une liaison pivotante (172) de telle sorte qu'un mouvement relativement important de l'élément de commande (160) provoque un mouvement plus petit de l'élément conique (174).

5. Un élément de fixation selon la revendication 1, dans lequel le moyen de transmission de poussée comprend un coin coulissant respectif (212, 214, 216) pour chaque émetteur de fluide sous pression (202, 204, 206), et des moyens agissant en réponse à l'élément de commande manuelle (196) pour déplacer chaque coin (212, 214, 216) axialement par rapport au boîtier cylindrique (190) de manière à provoquer le mouvement radial d'un élément suiveur respectif (208, 210, 211) pour chaque circuit hydraulique (16, 18, 20, 100, 106).

6. Un ensemble de fixation selon l'une quelconque des revendications précédentes, dans lequel l'élément commandé (30, 62) est un miroir de rétroviseur de vehicule.

# 0 152 219

FIG.1.

— PRIOR ART —

FIG.2.

FIG.3.

FIG.4.

FIG.5.

FIG.6.

FIG.7.